# EUROPÄISCHE PATENTSCHRIFT

(11) **EP 1 448 428 B1**
(45) Veröffentlichungstag und Bekanntmachung des Hinweises auf die Patenterteilung: **21.06.2006**
(21) Anmeldenummer: 02776860.5
(22) Anmeldetag: 28.10.2002
(51) Int. Cl.: B62D 25/20, B62D 29/00, B62D 21/09, B62D 21/10, B60N 2/005, B60N 2/06

(54) **BODENMODUL FÜR EIN FAHRZEUG**
FLOOR MODULE FOR A VEHICLE
MODULE DE PLANCHER CON U POUR UN VEHICULE

(30) Priorität: 14.11.2001 DE 20118424 U
(43) Veröffentlichungstag der Anmeldung: 25.08.2004
(73) Patentinhaber: Enno Roggemann Gmbh & Co. KG, 16352 Basdorf (DE)
(72) Erfinder: FITZE, Herbert, 13156 Berlin (DE)
(74) Vertreter: Philipp, Matthias
(86) Internationale Anmeldenummer: PCT/DE2002/004024
(87) Internationale Veröffentlichungsnummer: WO 2003/045764

(56) Entgegenhaltungen:
- FR-A- 2 793 453
- US-B1- 6 182 411
- US-B1- 6 219 983

## Beschreibung

Die Erfindung betrifft ein Bodenmodul für ein Fahrzeug, mit einer einbaufertig zugeschnittenen Bodenplatte, die eine Dicke aufweist und mit mindestens einer Tragschiene einstückig verbunden ist, wobei die Bodenplatte mindestens einen schlitzförmigen Ausschnitt zum Aufnehmen der mindestens einen Tragschiene aufweist.

Zahlreiche Fahrzeughersteller bedienen heutzutage den Markt mit sogenannten Multi-Fahrzeugen. Das bedeutet, daß bspw. bei Kombifahrzeugen in den Boden Schienensysteme eingebaut werden, wodurch sich erreichen läßt, daß Sitze und andere Module austauschbar und demontierbar sind und Fahrzeuge für unterschiedliche Zwecke genutzt werden können.

Hierbei wird gegenwärtig nach folgendem Prinzip gearbeitet: Zuerst werden Schienen (Stahlprofile oder Aluminiumprofile) im Bodenbereich des Fahrzeugs angeschraubt oder verklebt. Neben den bzw. zwischen die Schienen werden Bodenplatten aus Kunststoff oder Holz angeordnet, die gegen Verschieben gesichert werden müssen. Hierbei ist es zweckmäßig, wenn die Schienen den gesamten Fahrgastraum in der Länge ausfüllen.

Wenn die Schienen kürzer sind als der Fahrgastraum, muß der abgrenzende Bodenbereich aus einer großen Platte bestehen, in der entsprechende Ausschnitte für die Schienen ausgestanzt, ausgefräst oder in sonstiger Weise vorbereitet sein müssen. In solchen Fällen treten Probleme bei der Handhabung auf, weil eine große Bodenplatte mit langen Schienenausschnitten relativ instabil ist.

In beiden Fällen ist es schwierig, an den äußeren Seiten der Schienen noch ein optisch und mechanisch zufriedenstellendes Bodensystem anzuordnen, weil die entsprechenden Teile sehr schmal werden.

Aus der US 6,219,983 ist ein Bodenmodul nach dem Oberbegriff des Anspruchs 1 bekannt. Dabei umfaßt die Bodenplatte eine äußere Platte, auf der mehrere Kernteile und Befestigungsschienen angeordnet sind, die von einer Abdeckplatte abgedeckt sind. Die Befestigungsschienen werden bei der Herstellung der Bodenplatte auf die äußere Platte gelegt und weisen Flansche auf, um eine Befestigung der Befestigungsschienen an der äußeren Platte und der Abdeckplatte zu erreichen. Dies ist relativ arbeitsaufwendig.

Aus der US 6,182,411 sind Befestigungsschienen als Strukturkomponenten für den Bodenausbau eines Fahrzeugs bekannt, die in rinnenartige Vertiefungen eines Bodenblechs eingesetzt werden.

Die Aufgabe der Erfindung besteht darin, ein Bodenmodul bereitzustellen, bei dem die schwierige Handhabung der bisherigen Bodenplatten entfällt und der Einbau von Bodenplatte und Schienen vereinfacht und verkürzt wird.

Diese Aufgabe wird erfindungsgemäß durch ein Bodenmodul nach Anspruch 1 gelöst.

Bevorzugt ist die Bodenplatte mit der mindestens einen Tragschiene verklebt, wobei es sich um eine Sitzschiene zur Befestigung von sitzen o.ä. handeln kann.

Es kann vorgesehen sein, daß die Bodenplatte vor dem Verbinden mit der mindestens einen Tragschiene einteilig ist.

Alternativ kann die Bodenplatte aus mehreren Elementen bestehen, die durch jeweils eine dazwischen angeordnete Tragschiene einteilig miteinander verbunden sind.

Die Tragschienen können geradlinig oder gekrümmt sein. Sie können flanschartige Ansätze zur Aufnahme eines benachbarten Randabschnitts der Bodenplatte bzw. eines Randabschnitts eines benachbarten Elements davon aufweisen. Die Tragschiene(n) kann (können) in Quer- und/oder Längsrichtung angeordnet sein.

Es kann vorgesehen sein, daß die Bodenplatte auf einer Oberseite mit einem Bodenverlag versehen ist, insbesondere mit Velour, Kunststoff (TPO-Folie, PVC- oder PP-Belag) mit Phenolharz getränktem Papier (Siebdruck), Holzwerkstoffplatte, beschichteter Platte, Echtholzbeschichtung, Metallplatte mit oder ohne Prägung.

Die Bodenplatte kann aus Holzwerkstoff (Sperrholz, OSB-Platte, Spanplatte, Faserplatte), Kunststoff oder Metall bestehen.

Die Tragschienen können profiliert sein und aus Metall oder Kunststoff bestehen, und sie können aus einem ein- oder mehrteiligen Profil bestehen.

Vorzugsweise sind Bodenplatte und Tragschiene(n) mit einem elastischen Klebstoff verklebt. Bodenplatte und Tragschiene(n) können mit Ein- oder Zweikomponentenkleber verklebt sein.

Die Bodenplatte kann auf einer Unterseite mit einer Dämpfungsschicht oder Aufdoppelung versehen sein, insbesondere aus Holz, Holzwerkstoff, Kunststoff oder Kunststoffschaum, Holzfaserplatte, Naturfaserplatte oder Kombinationen daraus (z.B. Faservlies-Verbundplatte).

Es kann vorgesehen sein, daß in oder an der Bodenplatte oder Dämpfungsschicht bzw. Aufdoppelung Elektroleitungen, Steckdosen, Leerrohre oder sonstige Versorgungs- oder Installationsteile installiert sind.

Die Erfindung bezieht sich auch auf ein Fahrzeug mit einem erfindungsgemäßen Bodenmodul. Hierbei kann vorgesehen sein, daß das Bodenmodul über die Tragschiene(n) an dem Fahrzeug fixiert ist. Insbesondere kann das Bodenmodul an der (den) Tragschiene(n) mit dem Fahrzeug verschraubt oder verklebt sein, insbesondere mit dessen Bodenblech.

Die Erfindung wird nachfolgend anhand verschiedener Ausführungsbeispiele erläutert, wobei auf eine Zeichnung Bezug genommen ist, in der
Fig. 1 eine perspektivische Ansicht eines erfindungsgemäßen Bodenmoduls (schematisch) mit integrierten Tragschienen zeigt;
Fig. 2 eine Variante des Bodenmoduls nach Fig. 1 mit durchgehenden Tragschienen zeigt;
Fig. 3 eine ausschnittsweise Querschnittsansicht eines erfindungsgemäßen Bodenmoduls im Bereich einer Tragschiene im eingebauten Zustand zeigt;
Fig. 4 eine Ansicht entsprechend Fig. 3 für eine zweite Ausführungsform zeigt; und
Fig. 5 eine Ansicht entsprechend Fig. 3 für eine dritte Ausführungsform zeigt.

Die Erfindung beruht auf dem Gedanken, aus bzw. mit den in ein Fahrzeug einzubauenden Bodenplatten bzw. Einlegeböden vor deren Einbau komplett mit eingeklebten Tragschienen bzw. Sitzschienen ein einbaufertiges Bodenmodul herzustellen, so daß die Tragschienen als Stabilisator für das ganze Bodenmodul dienen können und außerdem für ein Hebewerkzeug als Einbauhilfe gut geeignet sind. Mit dieser Lösung lassen sich auch sehr schmale Teile in den Randbereichen, bspw. den Einstiegsbereichen, stabil belegen.

Da die Bodenplatte beim Verkleben mit den Tragschienen auch im Bereich des Übergangs von Tragschienen zu anderen Werkstoffen wasserdicht wird, kann weder Feuchtigkeit noch Schmutz eindringen, was für die Vermeidung von Korrosion im Bereich des Bodenblechs des Fahrzeugs von Bedeutung ist.

Das erfindungsgemäße einbaufertige Bodenmodul ermöglicht erhebliche Einsparungen von Fertigungszeiten. Erfindungsgemäße Bodenmodule können in jeder Art Kraftfahrzeug (Personenfahrzeuge, Busse, Nutzfahrzeuge ...), aber auch in Bahnfahrzeugen und Flugzeugen eingesetzt werden.

Die Fixierung des gesamten Moduls erfolgt vorzugsweise über die ohnehin erforderliche Befestigung der Tragschienen im und am Fahrzeug.

Das erfindungsgemäße Bodenmodul kann selbstverständlich neben dem Fahrzeugneubau auch als Reparatur- bzw. Nachrüstteil für Fahrzeuge Verwendung finden.

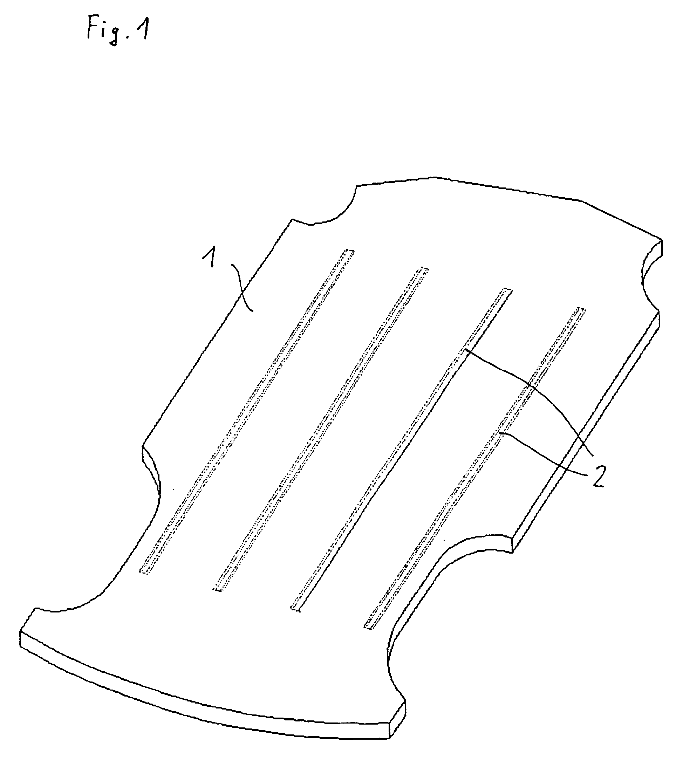

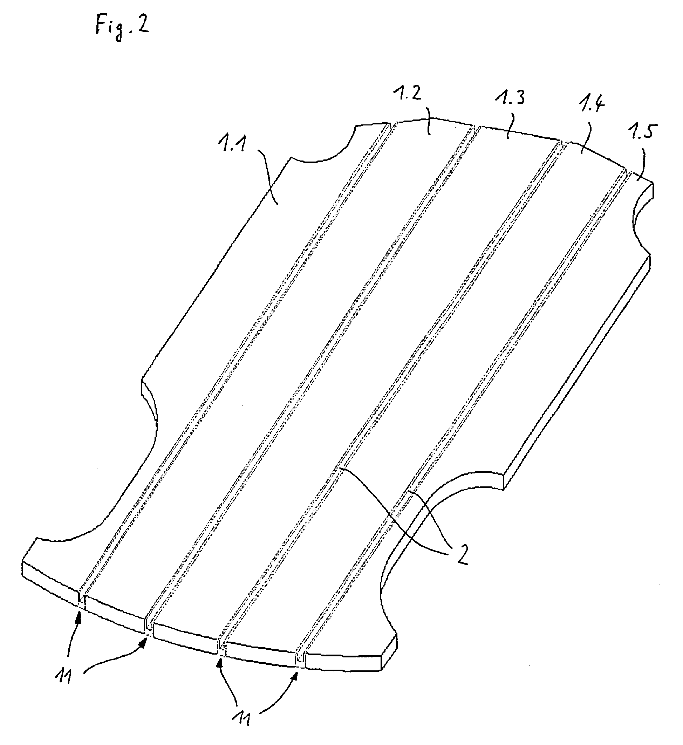

In Fig. 1 und 2 sind schematisch zwei erfindungsgemäße Bodenmodule dargestellt, wobei Fig. 1 eine einbaufertig zugeschnittene, einteilige Bodenplatte 1 zeigt, in der eine Reihe von Sitz- bzw. Tragschienen 2 in entsprechenden vorab in die Bodenplatte eingebauten Schlitzen 11 integriert sind. Die Tragschienen 2 sind, wie noch im einzelnen erläutert wird, mit der Bodenplatte 1 einstückig verklebt. Die Ausführungsform nach Fig. 2 unterscheidet sich demgegenüber dadurch, daß die Bodenplatte aus einer Reihe von Elementen 1.1, 1.2 ... 1.5 besteht, die jeweils durch dazwischen angeordnete Tragschienen 2 einstückig miteinander verbunden sind, so daß ein erfindungsgemäßes Bodenmodul gebildet wird.

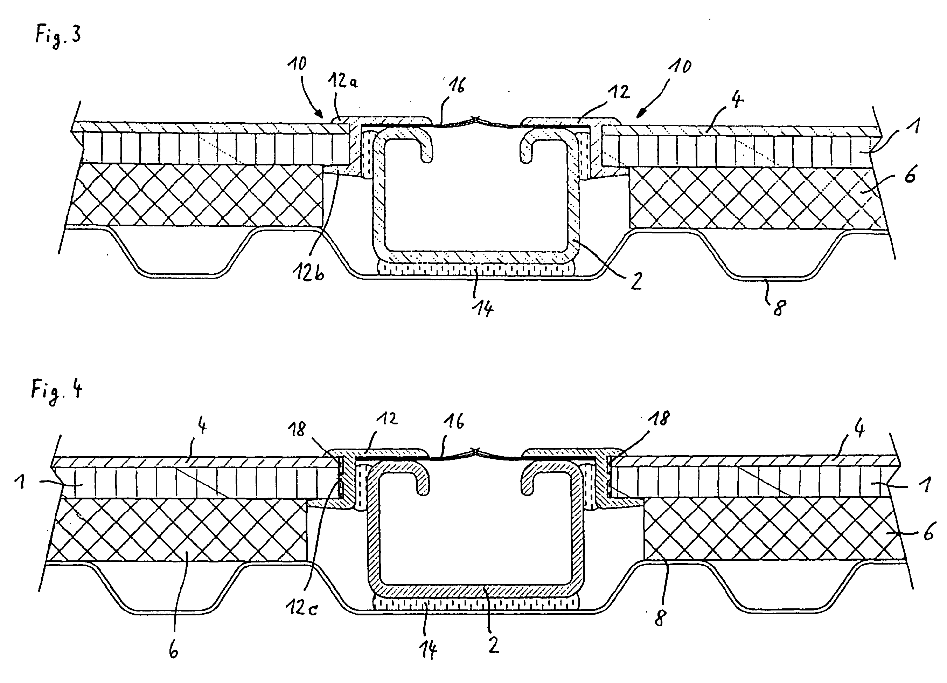

Fig. 3 zeigt eine Querschnittsansicht eines erfindungsgemäßen Bodenmoduls im Bereich einer Tragschiene im in ein Fahrzeug eingebauten Zustand. Die Bodenplatte 1 ist in diesem Fall auf ihrer Oberseite mit einem Bodenbelag 4, bspw. Teppich, belegt und an ihrer Unterseite mit einer dämpfenden Schaumstoffunterlage 6 versehen, mit der das Bodenmodul auf einem Bodenblech 8 des Fahrzeugs aufliegt. Auf seitliche Randabschnitte 10 eines in die Bodenplatte eingebrachten Schlitzes 11 sind Abdeckprofile 12 aufgeklemmt und festgeklebt und ihrerseits mit der Tragschiene 2 verklebt (ein- oder zweikomponentiger Klebstoff 14). Zwischen den Abdeckprofilen 12 ist eine die Tragschiene 2 abdeckende Bürstendichtung 16 angeordnet.

Die Abdeckprofile 12 weisen flanschartige Ansätze 12a, 12b auf, die zusammen mit der hochfesten Klebstoffverbindung zwischen Bodenplatte und Abdeckprofilen einerseits und zwischen Abdeckprofilen und Tragschiene andererseits für eine einstückige, integrale und hochfeste Verbindung der Komponenten der Bodenmoduls sorgen, so daß dieses als Einheit gehandhabt werden kann und nach dem Einsetzen in das betreffende Fahrzeug mittels Klebeverbindungen zwischen Tragschienen 2 und Bodenblech 8 fest mit dem Fahrzeug verbindbar ist. Zum Zwecke der Erfindung sind die Abdeckprofile als Teil der gesamten Tragschiene 2 anzusehen, da die Verbindung zu einem kompletten Bodenmaterial hierüber erfolgt ("mehrteilige" Tragschiene).

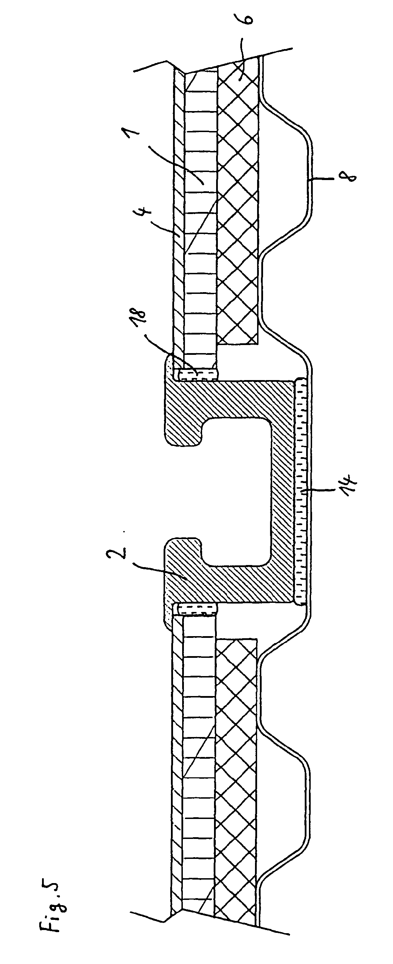

Fig. 4 zeigt einen Aufbau entsprechend Fig. 3, wobei hier im Bereich des stirnseitigen Kontakts zwischen Abdeckprofilen 12 und Bodenplatte 1 ein Klebstoffpolster 18 vorgesehen ist, das dadurch erzielt wird, daß die Abdeckprofile 12 Abstandselemente 12c aufweisen, die für einen Zwischenraum zwischen der Stirnkante der Bodenplatte 1 und der gegenüberliegenden Fläche des Abdeckprofils 12 sorgen.

Fig. 5 zeigt eine Ausführungsform ähnlich Fig. 3 und 4, wobei allerdings die in Fig. 3 und 4 aus Stahl bestehende Tragschiene 2 hierbei aus Aluminium besteht und einteilig ausgeführt ist. Wie Fig. 5 zeigt, ist die Tragschiene 2 in diesem Fall unmittelbar mit den Stirnflächen der Randabschnitte 10 des Schlitzes der Bodenplatte 1 verklebt, und das einbaufertige Bodenmodul ist über die Tragschiene 2 mit dem Bodenblech 8 des Fahrzeugs verbunden (verklebt).

Als weiterer Vorteil ergibt sich durch das erfindungsgemäße Bodenmodul ein Ausgleich von Unebenheiten im Bereich des Bodenblechs, so daß keine Verspannungen der Sitzschienen auftreten können, die sonst leicht zur Verklemmung der Sitze führen.

### Bezugszeichenliste

- 1: Bodenplatte
- 1.1, 1.2 ... 1.5: Elemente von 1
- 2: Tragschiene
- 4: Bodenbelag
- 6: Schaumstoffünterlage
- 8: Bodenblech
- 10: Randabschnit (von 1)
- 12: Abdeckprofil
- 12a, b: flanschartige Ansätze
- 12c: Abstandselement
- 14: Klebstoff
- 16: Bürstendichtung
- 18: Klebstoffpolster

## Patentansprüche

1. Bodenmodul für ein Fahrzeug, mit einer einbaufertig zugeschnittenen Bodenplatte (1), die eine Dicke aufweist und mit mindestens einer Tragschiene (2) einstückig verbunden ist, wobei die Bodenplatte (1) mindestens einen schlitzförmigen Ausschnitt (11) zum Aufnehmen der mindestens einen Tragschiene (2) aufweist, **dadurch gekennzeichnet, daß** die Tragschiene (2) und der schlitzförmige Ausschnitt (11) vollständig durch die Dicke der Bodenplatte (1) hindurchgehen.

2. Bodenmodul nach Anspruch 1, **dadurch gekennzeichnet, daß** die Bodenplatte (1) mit der mindestens einen Tragschiene (2) verklebt ist.

3. Bodenmodul nach Anspruch 1 oder 2, **dadurch gekennzeichnet, daß** die Tragschiene(n) Sitzschiene(n) zum Befestigen von Sitzen ist (sind).

4. Bodenmodul nach einem der vorangehenden Ansprüche, **dadurch gekennzeichnet, daß** die Bodenplatte (1) vor dem Verbinden mit der mindestens einen Tragschiene (2) einteilig ist.

5. Bodenmodul nach einem der Ansprüche 1 bis 3, **dadurch gekennzeichnet, daß** die Bodenplatte (1) aus mehreren Elementen (1.1, 1.2 ... 1.5) besteht, die durch jeweils eine dazwischen angeordnete Tragschiene (2) einteilig miteinander verbunden sind.

6. Bodenmodul nach einem der vorangehenden Ansprüche, **dadurch gekennzeichnet, daß** die Tragschiene(n) geradlinig oder gekrümmt ist (sind).

7. Bodenmodul nach einem der vorangehenden Ansprüche, **dadurch gekennzeichnet, daß** die Tragschiene(n) (2) flanschartige Ansätze (12a, b) zum Aufnehmen eines benachbarten Randabschnitts (10) der Bodenplatte (1) oder eines benachbarten Elements (1.1, 1.2,..., 1.5) davon aufweist (aufweisen).

8. Bodenmodul nach einem der vorangehenden Ansprüche, **dadurch gekennzeichnet, daß** die Tragschiene(n) in Quer- und / oder Längsrichtung angeordnet ist (sind).

9. Bodenmodul nach einem der vorangehenden Ansprüche, **dadurch gekennzeichnet, daß** mindestens eine Tragschiene (2) profiliert ist und aus Metall oder Kunststoff besteht.

10. Bodenmodul nach einem der vorangehenden Ansprüche, **dadurch gekennzeichnet, daß** die mindestens eine Tragschiene (2) aus einem ein- oder mehrteiligen Profil besteht.

11. Bodenmodul nach einem der vorangehenden Ansprüche, **dadurch gekennzeichnet, daß** die Bodenplatte (1) auf einer Oberseite mit einem Bodenbelag (4) versehen ist, insbesondere mit Velour, Kunststoff (TPO-Folie, PVC- oder PP-Belag), mit Phenolharz getränkten Papier, Holzwerkstoffplatte, beschichteter Platte, Echtholzbeschichtung oder Metallplatte mit oder ohne Prägung.

12. Bodenmodul nach einem der vorangehenden Ansprüche, **dadurch gekennzeichnet, daß** die Bodenplatte (1) aus Holzwerkstoff (Sperrholz, OSB-Platte, Spanplatte, Faserplatte), Kunststoff oder Metall besteht.

13. Bodenmodul nach einem der vorangehenden Ansprüche, **dadurch gekennzeichnet, daß** Bodenplatte (1) und Tragschiene(n) (2) mit einem elastischen Klebstoff (14) verklebt sind.

14. Bodenmodul nach einem der vorangehenden Ansprüche, **gekennzeichnet durch** Ein- oder Zweikomponentenklebstoff.

15. Bodenmodul nach einem der vorangehenden Ansprüche, **dadurch gekennzeichnet, daß** die Bodenplatte (1) auf einer Unterseite mit einer Dämpfungsschicht (6) oder Aufdoppelung versehen ist, insbesondere aus Holz, Holzwerkstoff, Kunststoff oder Kunststoffschaum, Holzfaserplatte, Naturfaserplatte oder Kombinationen daraus (z. B. Faservlies-Verbundplatte).

16. Bodenmodul nach einem der vorangehenden Ansprüche, **dadurch gekennzeichnet, daß** in oder an der Bodenplatte oder der Dämpfungsschicht bzw. Aufdoppelung Elektroleitungen, Steckdosen, Leerrohre oder sonstige Versorgungs- oder Installationsteile integriert sind.

17. Fahrzeug mit einem Bodenmodul nach einem der vorangehenden Ansprüche.

18. Fahrzeug nach Anspruch 17, **dadurch gekennzeichnet, daß** das Bodenmodul über die Tragschiene(n) (2) an dem Fahrzeug fixiert ist.

19. Fahrzeug nach Anspruch 18, **dadurch gekennzeichnet, daß** das Bodenmodul an der (den) Tragschiene(n) mit dem Fahrzeug verschraubt oder verklebt ist, insbesondere mit dessen Bodenblech (8).

## Claims

1. Floor module for a vehicle, with a floor panel (1) which is cut to size ready for installation and which has a thickness and is connected integrally to at least one supporting rail (2), the floor panel (1) having at least one slot-shaped cutout (11) for receiving the at least one supporting rail (2), **characterized in that** the supporting rail (2) and the slot-shaped cutout (11) pass entirely through the thickness of the floor panel (1).

2. Floor module according to Claim 1, **characterized in that** the floor panel (1) is adhesively bonded to the at least one supporting rail (2).

3. Floor module according to Claim 1 or 2, **characterized in that** the supporting rail(s) is (are) (a) seat rail(s) for the fastening of seats.

4. Floor module according to one of the preceding claims, **characterized in that** the floor panel (1) is in one piece before connection to the at least one supporting rail (2).

5. Floor module according to one of Claims 1 to 3, **characterized in that** the floor panel (1) comprises a plurality of elements (1.1, 1.2 ... 1.5) which are connected to one another as one piece by means of a supporting rail (2) arranged in between in each case.

6. Floor module according to one of the preceding claims, **characterized in that** the supporting rail(s) is (are) rectilinear or curved.

7. Floor module according to one of the preceding claims, **characterized in that** the supporting rail(s) (2) has (have) flange-like extensions (12a, b) for receiving an adjacent edge section (10) of the floor panel (1) or an adjacent element (1.1, 1.2, ..., 1.5) thereof.

8. Floor module according to one of the preceding claims, **characterized in that** the supporting rail(s) is (are) arranged in the transverse and/or longitudinal direction.

9. Floor module according to one of the preceding claims, **characterized in that** at least one supporting rail (2) is profiled and is made from metal or plastic.

10. Floor module according to one of the preceding claims, **characterized in that** the at least one supporting rail (2) comprises a one- or multi-piece profile.

11. Floor module according to one of the preceding claims, **characterized in that** the floor panel (1) is provided on an upper side with a floor covering (4), in particular with velour, plastic (TPO film, PVC or PP covering), paper impregnated with phenolic resin, board of wood-based material, coated board, real-wood coating or a metal plate with or without an impression.

12. Floor module according to one of the preceding claims, **characterized in that** the floor panel (1) is made from a wood-based material (plywood, oriented strand board, chipboard, fibreboard), plastic or metal.

13. Floor module according to one of the preceding claims, **characterized in that** floor panel (1) and supporting rail(s) (2) are adhesively bonded with an elastic adhesive (14).

14. Floor module according to one of the preceding claims, **characterized by** one- or two-component adhesive.

15. Floor module according to one of the preceding claims, **characterized in that** the floor panel (1) is provided on an underside with a damping layer (6) or a doubled-over portion, in particular of wood, wood-based material, plastic or expanded plastics, fibre building board, natural fibreboard or combinations thereof (e.g. fibre-fleece composite board).

16. Floor module according to one of the preceding claims, **characterized in that** electric lines, sockets, empty tubes or other supply or installation parts are integrated in or on the floor panel or the damping layer or doubled-over portion.

17. Vehicle with a floor panel according to one of the preceding claims.

18. Vehicle according to Claim 17, **characterized in that** the floor module is fixed on the vehicle via the supporting rail(s) (2).

19. Vehicle according to Claim 18, **characterized in that** the floor module is screwed or adhesively bonded to the vehicle, in particular to the floor plate (8) thereof, at the supporting rail(s).

## Revendications

1. Module de plancher conçu pour un véhicule, avec une plaque de plancher (1) découpée prête à monter, qui présente une épaisseur et est reliée d'une seule pièce à au moins une glissière support (2), la plaque de plancher (1) présentant au moins une découpure (11) en forme de fente pour recevoir la au moins une glissière support (2), **caractérisé en ce que** la glissière support (2) et la découpure (11) en forme de fente traversent complètement l'épaisseur de la plaque de plancher (1).

2. Module de plancher selon la revendication 1, **caractérisé en ce que** la plaque de plancher (1) est collée à la au moins une glissière support (2).

3. Module de plancher selon la revendication 1 ou 2, **caractérisé en ce que** la ou les glissière(s) support est (sont) des glissières à siège, prévues pour la fixation de sièges.

4. Module de plancher selon l'une des revendications précédentes, **caractérisé en ce que** la plaque de plancher (1) est en une seule partie, avant la liaison à la au moins une glissière support (2).

5. Module de plancher selon l'une des revendications 1 à 3, **caractérisé en ce que** la plaque de plancher (1) est formée d'une pluralité d'éléments (1.1, 1.2 ... 1.5), reliés ensemble d'une seule pièce, au moyen chaque fois d'une glissière support (2) en position intermédiaire.

6. Module de plancher selon l'une des revendications précédentes, **caractérisé en ce que** la ou les glissière(s) support est (sont) rectiligne(s) ou incurvée(s).

7. Module de plancher selon l'une des revendications précédentes, **caractérisé en ce que** la ou les glissière(s) support (2) présente (présentent) des appendices (12a, b) du genre de bride, pour recevoir un tronçon de bordure (10) voisin de la plaque de plancher (1), ou d'un élément (1.1, 1.2 ... 1.5) voisin.

8. Module de plancher selon l'une des revendications précédentes, **caractérisé en ce que** la ou les glissière(s) support est (sont) disposées en direction transversale et/ou longitudinale.

9. Module de plancher selon l'une des revendications précédentes, **caractérisé en ce qu'**au moins une glissière support (2) est profilée et est formée de métal ou de matière synthétique.

10. Module de plancher selon l'une des revendications précédentes, **caractérisé en ce que** la au moins une glissière support (2) est formée d'un profilé en une ou en plusieurs partie(s).

11. Module de plancher selon l'une des revendications précédentes, **caractérisé en ce que** la plaque de plancher (1) est munie, sur une face supérieure, d'un revêtement de plancher (4), en particulier en velours, matière synthétique (feuille de TPO, revêtement en PVC ou en PP), de papier imbibé de résine phénolique, d'une plaque de matériau ligneux, d'une plaque revêtue, d'un revêtement en bois véritable ou d'une plaque en métal, avec ou sans façonnage tridimensionnel.

12. Module de plancher selon l'une des revendications précédentes, **caractérisé en ce que** la plaque de plancher (1) est formée en matériau ligneux (contreplaqué, plaque en OSB, panneau de particulier, plaque en fibres), en matière synthétique, ou en métal.

13. Module de plancher selon l'une des revendications précédentes, **caractérisé en ce que** la plaque de plancher (1) et la ou les glissière(s) support (2) sont collée(s) avec un adhésif (14) élastique.

14. Module de plancher selon l'une des revendications précédentes, **caractérisé par** un adhésif mono- ou bi-composant.

15. Module de plancher selon l'une des revendications précédentes, **caractérisé en ce que** la plaque de plancher (1) est munie, en face inférieure, d'une couche d'amortissement (6) ou d'un doublage, en particulier en bois, en matériau ligneux, en matière synthétique, ou en mousse de matière synthétique, en panneau de fibres de bois, en panneau de fibres naturelle ou en combinaisons de ceux-ci (par exemple panneau composite en matelas de fibres).

16. Module de plancher selon l'une des revendications précédentes, **caractérisé en ce que**, dans ou sur le panneau de plancher ou la couche d'amortissement ou le doublage, sont intégrées des lignes électriques, des prises de courant, des tubes vides, ou d'autres parties, servant à l'alimentation ou à l'installation.

17. Véhicule avec un module de plancher selon l'une des revendications précédentes.

18. Véhicule selon la revendication 17, **caractérisé en ce que** le module de plancher est fixé au véhicule, par l'intermédiaire de la ou des glissière(s) support (2).

19. Véhicule selon la revendication 18, **caractérisé en ce que** le module de plancher est vissé ou collé au véhicule, sur la ou les glissière(s) support, en particulier avec sa tôle de plancher (8).
